# EUROPEAN PATENT APPLICATION

(11) **EP 4 435 912 A1**
(43) Date of publication of application: **25.09.2024**
(21) Application number: 23778791.6
(22) Date of filing: 26.01.2023
(51) Int. Cl.: H01M 10/04, H01M 10/052, H01M 10/0583

(54) **STACKED CELL MANUFACTURING METHOD, STACKED CELL MANUFACTURING DEVICE, AND STACKED CELL**

(30) Priority: 31.03.2022 JP 2022058304
(71) Applicant: Nissha Co., Ltd., Kyoto-shi, Kyoto 604-8551 (JP)
(72) Inventor: Sanada, Yuya, Kyoto-shi, Kyoto 604-8551 (JP)
(74) Representative: Isarpatent
(86) International application number: PCT/JP2023/002354
(87) International publication number: WO 2023/188753

(57) **Abstract**

The time to manufacture laminated batteries is shortened. A cutting process includes folding or winding a binding margin (13z) continuous with a separating portion (13p) of a separator member (13) and cutting the separator member (13) with a cutter (160) to form the binding margin (13z). A transfer process includes transferring a laminate body (10L) and the binding margin (13z). A main portion (13M) has a length at least twice a width of a wider side surface (10a) of the laminate body (10L). A laminate body formation process is at least partially performed in parallel with a binding process.

## Description

The present invention relates to a method for manufacturing a laminated battery, a manufacturing apparatus for a laminated battery, and a laminated battery.

### BACKGROUND

Patent Literature 1 (Japanese Patent No. 6632823) describes a method for manufacturing a laminated battery including winding and fixing a separator member around a laminate including positive plates, negative plates, and separators each between adjacent ones of the positive and negative plates.

### CITATION LIST

### PATENT LITERATURE

Patent Literature 1: Japanese Patent No. 6632823

### BRIEF SUMMARY

### TECHNICAL PROBLEM

As described in Patent Literature 1, when a single manufacturing apparatus laminates electrodes and a separator member and winds the separator member, the laminating process and the winding process are performed sequentially. The method for manufacturing the laminated battery described in Patent Literature 1 takes time to manufacture a single laminated battery.

One or more aspects of the present invention are directed to shortening the time to manufacture laminated batteries.

### SOLUTION TO PROBLEM

In response to the above issue, aspects of the present invention are described below. Any of these aspects may be combined as appropriate.

A method for manufacturing a laminated battery according to an aspect of the present invention includes forming a laminate body, cutting, transferring, and binding. The forming the laminate body includes forming the laminate body including a plurality of positive plates, a plurality of negative plates, and a separating portion of a separator member fanfolded in layers by fanfolding a strip of the separator member in layers while alternately placing the plurality of positive plates and the plurality negative plates on the layers of the separator member to have the layers of the separator member between the plurality of positive plates and the plurality negative plates. The cutting includes cutting the separator member after folding or winding a main portion of a binding margin continuous with the separating portion of the separator member to form the binding margin. The transferring includes transferring the laminate body and the binding margin with the main portion being folded or wound. The binding includes binding the laminate body with the binding margin by winding the binding margin around the laminate body at least once. The main portion has a length at least twice a width of a wider side surface of the laminate body. The forming the laminate body is at least partially performed in parallel with the binding.

With the method for manufacturing the laminated battery including the above processes, the main portion having a length at least twice the width of the wider side surface of the laminate body is folded or wound while being transferred, allowing smooth transition to the binding. The forming the laminate body is at least partially performed in parallel with the binding, thus shortening the manufacturing time.

In the above method for manufacturing the laminated battery, the cutting may include fanfolding the main portion in layers without placing an electrode plate between the layers. The transferring may include transferring the laminate body and the binding margin with the main portion fanfolded in layers without an electrode plate and the laminate body being held. The method for manufacturing the laminated battery including the above processes allows smooth transition from the forming the laminate body to the binding without adding further components to the manufacturing apparatus or without complicating the manufacturing apparatus.

In the above method for manufacturing the laminated battery, the cutting may include cutting the separator member to a length allowing a side edge of the binding margin to be placed on a side portion of the laminate body. The method for manufacturing the laminated battery including the above processes allows the side edge of the separator member to be easily placed on the side portion of the laminate body, thus allowing easy manufacture of a laminated battery with reduced failures.

In the above method for manufacturing the laminated battery, the laminate body may include a first laminate body and a second laminate body, and the binding margin may include a first binding margin and a second binding margin. The forming the laminate body may include forming the first laminate body and the first binding margin in parallel with and at a timing different from when the second laminate body and the second binding margin are formed. The transferring and the binding may include sequentially performing transferring and binding for the first laminate body and the first binding margin and for the second laminate body and the second binding margin. With the method for manufacturing the laminated battery including the above processes, the binding can bind the first laminate body with the first binding margin and the second laminate body with the second binding margin, allowing efficient manufacture of a laminated battery.

A manufacturing apparatus for a laminated battery according to an aspect of the present invention includes a laminating device, a transferrer, and a binder. The laminating device forms a laminate body including a plurality of positive plates, a plurality of negative plates, and a separating portion of a separator member fanfolded in layers by fanfolding a strip of the separator member in layers while placing the plurality of positive plates and the plurality of negative plates on the layers of the separator member to have the layers of the separator member between the plurality positive plates and the plurality negative plates. The laminating device folds or winds a main portion of a binding margin continuous with the separating portion of the separator member. The main portion has a length at least twice a width of a wider side surface of the laminate body. The laminating device cuts the separator member to form the binding margin. The transferrer transfers, from the laminating device to the binder, the laminate body and the binding margin with the main portion being folded or wound. The binder binds the laminate body with the binding margin by winding the binding margin around the laminate body at least once. The binder binds another laminate body at least partially in parallel with formation of the laminate body and the binding margin performed by the laminating device.

In the manufacturing apparatus for the laminated battery with the structure, the main portion having a length at least twice the width of the wider side surface of the laminate body is folded or wound while being transferred by the transferrer, allowing smooth transition to the binder. The binder binds another laminate body at least partially in parallel with formation of the laminate body and the binding margin performed by the laminating device, thus shortening the manufacturing time.

In the above manufacturing apparatus for the laminated battery, the laminating device may fanfold, before cutting the separator member, the main portion in layers without placing an electrode plate between the layers. The transferrer may transfer, from the laminating device to the binder, the laminate body and the binding margin by holding the laminate body and the main portion fanfolded in layers without an electrode plate placed between the layers. The manufacturing apparatus for the laminated battery with the structure allows, without having additional components or a complicated structure, smooth transition of the laminate body and the binding margin from the laminating device to the binding operation with the binder.

In the above manufacturing apparatus for the laminated battery, the laminating device may cut the separator member to a length allowing a side edge of the binding margin to be placed on a side portion of the laminate body. The manufacturing apparatus for the laminated battery with the structure allows the side edge of the separator member to be easily placed on the side portion of the laminate body, thus allowing easy manufacture of a laminated battery with reduced failures.

In the above manufacturing apparatus for the laminated battery, the laminating device may include a first laminating device and a second laminating device. The first laminating device and the second laminating device may each separately form the laminate body and the binding margin at different timings. The transferrer and the binder may perform transferring and binding sequentially for the laminate body and the binding margin formed by the first laminating device and for the laminate body and the binding margin formed by the second laminating device. In the manufacturing apparatus for the laminated battery with the structure, the binder can bind the laminate body with the binding margin formed by the first laminating device and bind the laminate body with the binding margin formed by the second laminating device in parallel with the operations of the first laminating device and the second laminating device, allowing efficient manufacture of a laminated battery.

A laminated battery according to an aspect of the present invention includes a plurality of positive plates and a plurality of negative plates alternating with one another, and a strip of a separator member including a separating portion and a binding margin. The separating portion is fanfolded in layers between the plurality of positive plates and the plurality of negative plates adjacent to each other. The binding margin is continuous with the separating portion. The bonding margin in the separator member binds a laminate body including the plurality of positive plates, the plurality of negative plates, and the separating portion fanfolded in layers, with the bonding margin wound around the laminate body at least once. The binding margin has creases resulting from being fanfolded in layers.

In the above laminated battery, the binding margin may have a side edge on a side portion of the laminate body. In the laminated battery with the structure, the side surface of the laminate is less likely to be damaged by a step formed with the separator member.

### ADVANTAGEOUS EFFECTS

The method for manufacturing the laminated battery or the manufacturing apparatus for the laminated battery according to the above aspects of the present invention shortens the time to manufacture laminated batteries.

### BRIEF DESCRIPTION OF DRAWINGS

FIG. 1 is a perspective view of an example laminated battery according to an embodiment of the present invention.
FIG. 2 is a perspective view of an example laminate.
FIG. 3 is an exploded perspective view of the laminate.
FIG. 4 is a perspective view of the laminate in FIG. 2 illustrating a binding margin.
FIG. 5 is a block diagram of an example manufacturing apparatus for a laminated battery.
FIG. 6 is a schematic cross-sectional view of a separator member installed on a laminating stage.
FIG. 7 is a schematic cross-sectional view of the separator member on which a positive plate is being placed.
FIG. 8 is a schematic cross-sectional view of the separator member being fanfolded in layers.
FIG. 9 is a schematic cross-sectional view of the separator member on which a negative plate is being placed.
FIG. 10 is a schematic cross-sectional view of the separator member being fanfolded in layers without electrode plates placed between the layers.
FIG. 11 is a schematic cross-sectional view of the separator member being fanfolded in layers without electrode plates placed between the layers.
FIG. 12 is a schematic cross-sectional view of the separator member being fanfolded in layers without electrode plates placed between the layers.
FIG. 13 is a schematic cross-sectional view of the separator member being cut.
FIG. 14 is a schematic cross-sectional view of a laminate body and a binding margin held by a transferrer.
FIG. 15 is a schematic cross-sectional view of the laminate body and the binding margin being transferred by the transferrer.
FIG. 16 is a schematic cross-sectional view of the laminate body and the binding margin being installed on a binder by the transferrer.
FIG. 17 is a schematic cross-sectional view of the separator member held by the binder.
FIG. 18 is a schematic cross-sectional view of the separator member with a portion fanfolded in layers without electrode plates being unfolded by the binder.
FIG. 19 is a schematic cross-sectional view of the laminate body at the start of binding.
FIG. 20 is a schematic cross-sectional view of the laminate body wound with the separator member half the perimeter.
FIG. 21 is a schematic cross-sectional view of the laminate body wound with the separator member once around the perimeter.
FIG. 22 is a schematic cross-sectional view of an example of a bound laminate.
FIG. 23 is a timing chart of an example operation of the manufacturing apparatus for the laminated battery including two laminating devices.
FIG. 24 is a timing chart of an example operation of the manufacturing apparatus for the laminated battery including three laminating devices.
FIG. 25 is a schematic cross-sectional view of the separator member being cut in modification C.

### DETAILED DESCRIPTION

### (1) Overview of Structure of Laminated Battery

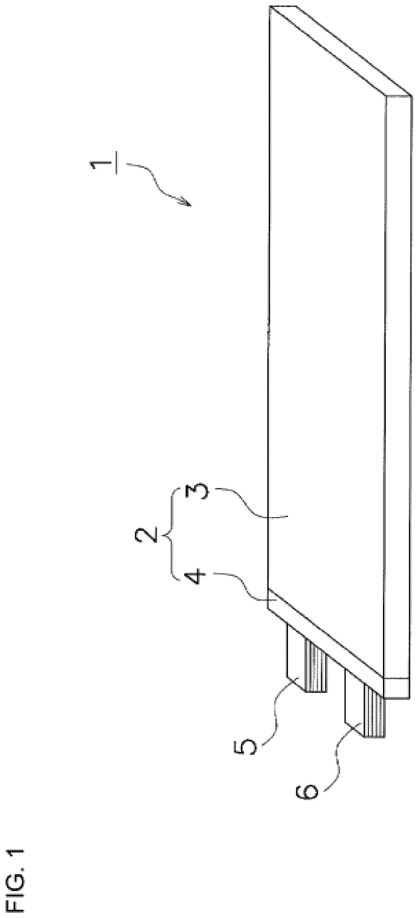

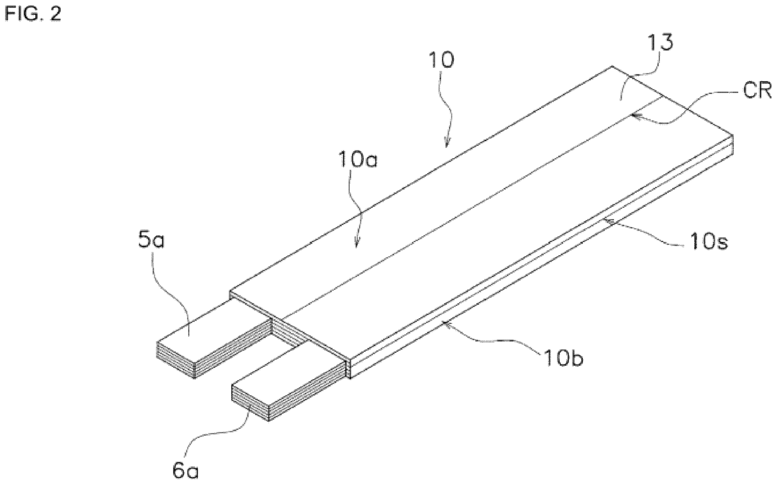

FIG. 1 is an external view of an example laminated battery. A laminated battery 1 shown in FIG. 1 includes a casing 2. The casing 2 accommodates a laminate 10 shown in FIG. 2. The laminated battery 1 is, for example, a lithium-ion battery. The casing 2 also accommodates a sealed-in electrolyte (not shown). The casing 2 includes a container 3 accommodating the laminate 10 and the electrolyte, and a lid 4 sealing the electrolyte. The laminated battery 1 has a positive electrode 5 and a negative electrode 6.

Positive tabs 5a and negative tabs 6a protrude from the casing 2. The positive tabs 5a and the negative tabs 6a are respectively the positive electrode 5 and the negative electrode 6 of the laminated battery 1. The laminate 10 in the laminated battery 1 includes the positive tabs 5a and the negative tabs 6a. A laminated battery in another form may not include the positive tabs 5a and the negative tabs 6a in the laminate 10 as the tabs of the laminated battery. For example, a laminated battery in another form may include other components as the tabs of the battery in place of the positive tabs 5a and the negative tabs 6a of the laminate 10. The tabs of the battery may be electrically connected to the positive tabs 5a and the negative tabs 6a of the laminate 10 inside the battery.

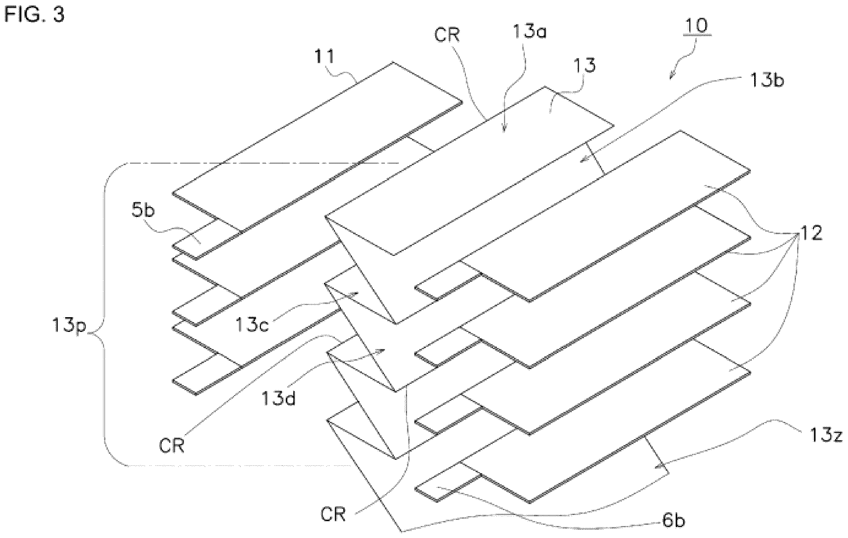

FIG. 3 is an exploded view of the laminate 10. The laminate 10 includes multiple positive plates 11, multiple negative plates 12, and a separator member 13 assembled together. Each positive plate 11 contains a positive active material for the positive electrode 5 of the laminated battery 1. Each negative plate 12 contains a negative active material for the negative electrode 6 of the laminated battery 1. The separator member 13 has pores allowing ions to penetrate through. The separator member 13 may be, for example, a porous membrane or a nonwoven fabric formed from a synthetic resin. The synthetic resin may be, for example, a polyolefin resin. The separator member 13 is fanfolded in layers. Being fanfolded in layers refers to being folded in a zigzag manner. The separator member 13 is folded back at a first crease CR to have two rectangular portions 13a and 13b facing each other. The separator member 13 is then folded back at a second crease CR to have two rectangular portions 13b and 13c facing each other. One negative plate 12 is placed between the two rectangular portions 13a and 13b of the separator member 13. One positive plate 11 is placed between the two rectangular portions 13b and 13c of the separator member 13. The rectangular portion 13b of the separator member 13 is thus placed between one positive plate 11 and one negative plate 12. After the separator member 13 is folded back at the subsequent crease CR, a negative plate 12 is placed between the two rectangular portions 13c and 13d facing each other. The rectangular portion 13c of the separator member 13 is thus placed between one positive plate 11 and one negative plate 12. The separator member 13 is thus a continuous strip fanfolded in layers in a zigzag manner and placed between positive plates 11 and negative plates 12 alternating with one another. In other words, the laminate 10 includes the separator member 13, a positive plate 11, the separator member 13, and a negative plate 12 arranged repeatedly in this order, or arranged in the order of, for example, the separator member 13, a negative plate 12, the separator member 13, a positive plate 11, the separator member 13, and a negative plate 12. The laminate 10 includes negative plates 12 as its uppermost and lowermost layers.

The laminate 10 is bound with a binding margin 13z of the continuous strip of separator member 13 wound around a laminate body 10L including the separator member 13, a positive plate 11, the separator member 13, and a negative plate 12 arranged repeatedly in this order. The laminate 10 thus includes, as shown in FIG. 2, an exposed portion of the separator member 13 wound around the perimeter of the laminate 10. The laminate 10 is a rectangular prism excluding the positive tabs 5a and the negative tabs 6a. The laminate body 10L being a rectangular prism has two wider side surfaces 10a and two narrower side portions 10b. The binding margin 13z of the separator member 13 is wound around the two side surfaces 10a and the two side portions 10b at least once. The binding margin 13z has a side edge 13s placed on a side portion 10b. When accommodated in the container 3 in the casing 2, the laminate 10 with the side edge 13s placed on a narrower side portion 10b is less likely to be damaged by a step formed with the side edge 13s pressed by the container 3 than the laminate 10 with the side edge 13s placed on a wider side surface 10a.

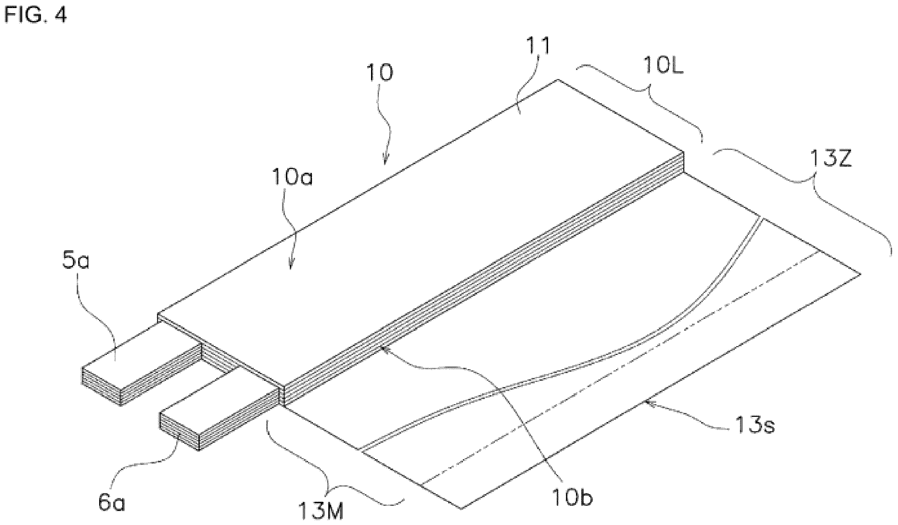

The separator member 13 includes a separating portion 13p (refer to FIG. 3) fanfolded in layers and placed between the positive plates 11 and the negative plates 12. The laminate body 10L includes the separating portion 13p, the positive plates 11, and the negative plates 12. In other words, the laminate body 10L is the portion of the laminate 10 excluding the binding margin 13z (refer to FIG. 4).

The binding margin 13z has a main portion 13M shown in FIG. 4 that is to be folded in layers (fanfolded in layers without electrode plates placed between the layers). The main portion 13M has a length at least twice the width of the wider side surface 10a of the laminate body 10L. The main portion 13M may have a length at least two-thirds of the overall length of the binding margin 13z to facilitate holding of the portion adjacent to the side edge 13s of the binding margin 13z.

### (2) Method for Manufacturing Laminated Battery

### (2-1) Overview of Manufacturing

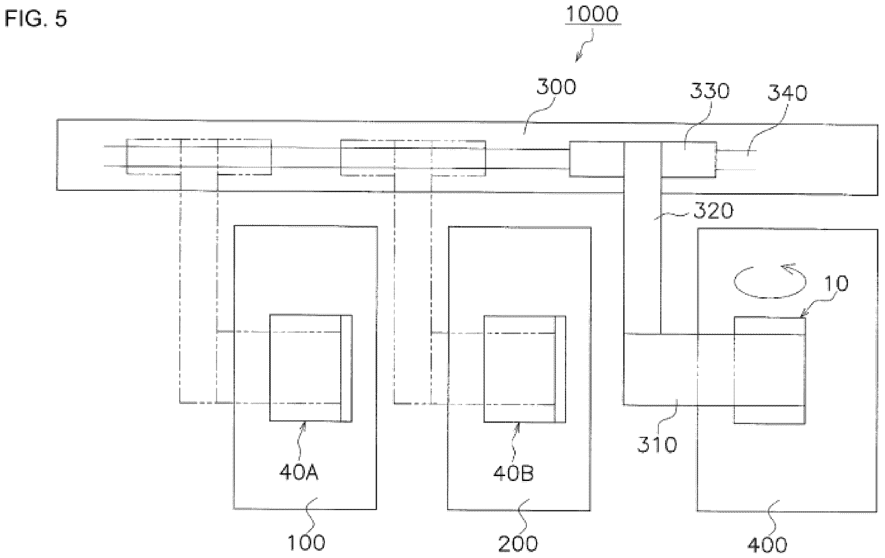

A method for manufacturing the laminated battery 1 described below includes a laminate body formation process, a cutting process, a transfer process, and a binding process. The laminated battery 1 is manufactured with, for example, a manufacturing apparatus 1000 for a laminated battery shown in FIG. 5. The manufacturing apparatus 1000 for the laminated battery includes a first laminating device 100, a second laminating device 200, a transferrer 300, and a binder 400.

In the laminate body formation process, the first laminating device 100 and the second laminating device 200 each independently fanfold a strip of separator member 13 in layers while alternately placing the positive plates 11 and the negative plates 12 on the layers of the separator member 13 to have the layers of the separator member 13 between the positive plates 11 and the negative plates 12. In other words, the first laminating device 100 and the second laminating device 200 each independently fold the strip of separator member 13 in a zigzag manner and place the layers of the separator member 13 between the positive plates 11 and the negative plates 12 to have the alternating positive plates 11 and negative plates 12 separated by the layers of the separator member 13. In the laminate body formation process, each of the first laminating device 100 and the second laminating device 200 thus forms the laminate body 10L including the positive plates 11, the negative plates 12, and the separating portion 13p fanfolded in layers.

Subsequently, in the cutting process, the first laminating device 100 and the second laminating device 200 each fanfold (fold) the main portion 13M (refer to FIG. 4) of the binding margin 13z in layers without placing electrode plates between the layers and cut the separator member 13 to form the binding margin 13z.

In the transfer process, the laminate body 10L and the binding margin 13z are then transferred, with the main portion 13M fanfolded in layers without electrode plates between the layers, by the transferrer 300 from the first laminating device 100 and the second laminating device 200 to the binder 400. The transferrer 300 transfers the laminate body 10L and the binding margin 13z alternately from the first laminating device 100 and the second laminating device 200 to the binder 400.

In the binding process, the binder 400 then holds the portion adjacent to the side edge 13s of the binding margin 13z and binds the laminate body 10L by winding the binding margin 13z around the laminate body at least once.

The laminate body formation process performed by the first laminating device 100 and the second laminating device 200 is at least partially performed in parallel with the binding process performed by the binder 400. In other words, while the first laminating device 100 forms the laminate body 10L, the binder 400 may perform binding. In another situation, while the second laminating device 200 forms the laminate body 10L, the binder 400 may performs binding.

### (2-2) Laminate Body Formation Process

The first laminating device 100 and the second laminating device 200 perform the same laminating operation. The laminating operation of the first laminating device 100 is herein described, without describing the laminating operation of the second laminating device 200. The first laminating device 100 and the second laminating device 200 may perform the laminating process in manners different from each other.

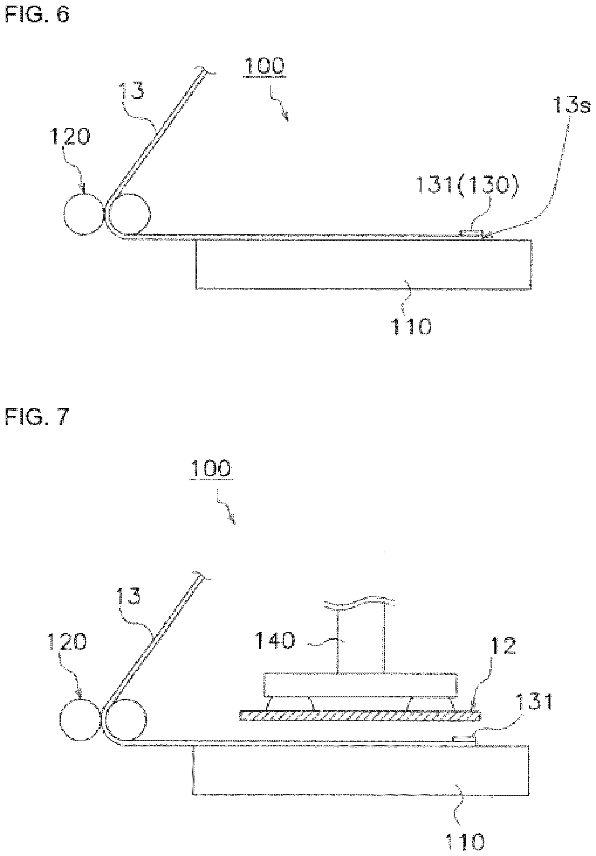

For example, the number of positive plates 11 and negative plates 12 laminated by the first laminating device 100 may be different from the number of positive plates 11 and negative plates 12 laminated by the second laminating device 200. In the cross-sectional views in FIG. 6 and subsequent figures, the separator member 13, the positive plates 11, and the negative plates 12 are illustrated schematically with, for example, inaccurate thicknesses for ease of illustration, and are not drawn to scale relative to the actual size of each component.

As shown in FIG. 6, the first laminating device 100 fixes the portion adjacent to one side edge 13s of the separator member 13 to a laminating stage 110 with two first fixtures 131. The first laminating device 100 spreads the separator member 13 on the laminating stage 110 with a guide roller 120. The two first fixtures 131 are arranged along the side edge 13s of the separator member 13.

As shown in FIG. 7, the first laminating device 100 fixes the separator member 13 spread on the laminating stage 110 with two second fixtures 132 located away from the first fixtures 131. The two second fixtures 132 are arranged along the crease CR of the separator member 13. After fixing the separator member 13 with the second fixtures 132, the first laminating device 100 sucks a negative plate 12 with a first feeder arm 140 and places the negative plate 12 on the separator member 13 spread on the laminating stage 110. Multiple negative plates 12 are stored in a first storage (not shown) in the first laminating device 100.

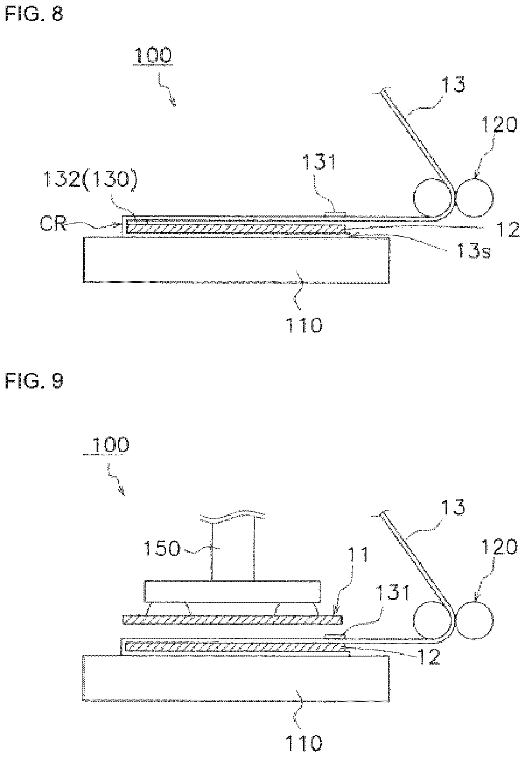

After placing the negative plate 12, as shown in FIG. 8, the first laminating device 100 moves the guide roller 120 at the position in FIG. 7 to the opposite position with respect to the laminating stage 110. As the guide roller 120 is moved, the separator member 13 is folded back at the second fixtures 132 and is spread on the negative plate 12 being placed. The separator member 13 spread on the negative plate 12 is then fixed with the first fixtures 131. The first laminating device 100 pulls out the two first fixtures 131 fixing the negative plate 12 in the direction along the side edge 13s and places the first fixtures 131 on the separator member 13 to hold the negative plate 12 from above.

The first laminating device 100 sucks, as shown in FIG. 9, a positive plate 11 with a second feeder arm 150 and places the positive plate 11 on the separator member 13 fixed with the first fixtures 131. Multiple positive plates 11 are stored in a second storage (not shown) in the second laminating device 200.

The first laminating device 100 repeats the operations described with reference to FIGS. 7 to 9 to place the separator member 13, the negative plate 12, and the positive plate 11 on the laminating stage 110 in the order of the separator member 13, the negative plate 12, the separator member 13, and the positive plate 11.

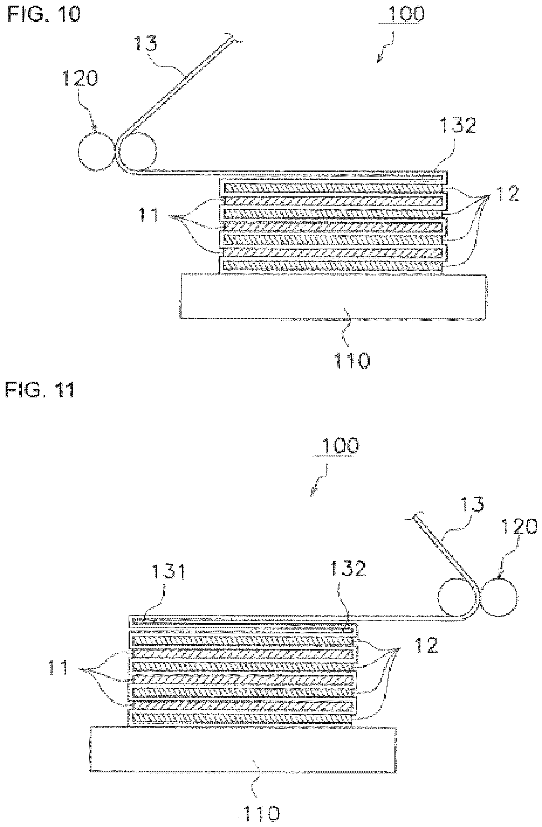

The laminate 10 described herein includes seven plates in total including three positive plates 11 and four negative plates 12. Thus, in the state in FIG. 10 in which three positive plates 11 and four negative plates 12 are layered, laminating of the positive plates 11 and the negative plates 12 is complete. The laminate body formation process includes the operations starting from fixing the separator member 13 on the laminating stage 110 shown in FIG. 6 to completing lamination of the positive plates 11 and the negative plates 12 shown in FIG. 10.

### (2-3) Cutting Process

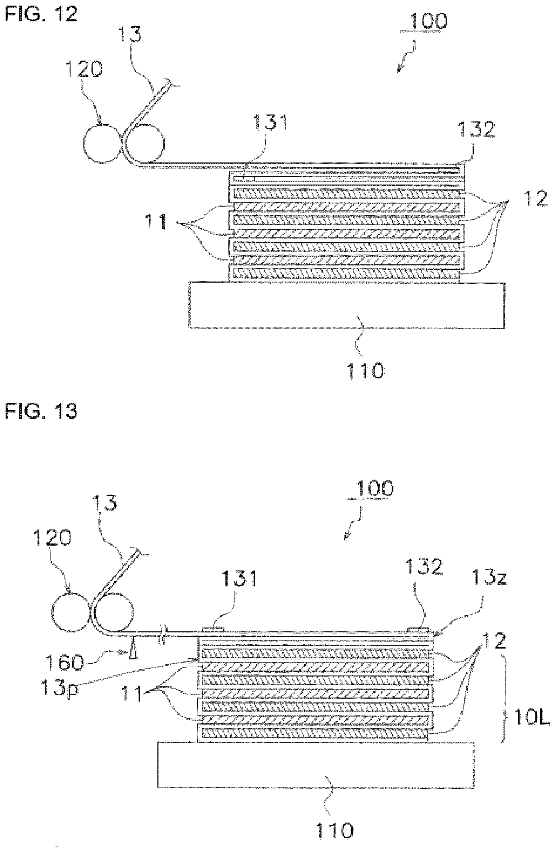

In FIG. 10, the separator member 13 is folded back at the second fixtures 132 without a positive plate 11 placed on the separator member 13. The separator member 13 thus has the fanfolded portions in contact with each other. In FIG. 11, the first laminating device 100 further folds back the separator member 13 in the state in FIG. 10 by fixing the separator member 13 with the second fixtures 132 to place the separator member 13 on the separator member 13. In FIG. 12, the first laminating device 100 further folds back the separator member 13 in the state in FIG. 11 by fixing the separator member 13 with the first fixtures 131 to place the separator member 13 on the separator member 13. The fanfolding in layers shown in FIGS. 10 to 12 is performed without placing the positive plates 11 and the negative plates 12 between the layers. This is referred to as fanfolding in layers without placing electrode plates between the layers or fanfolding in layers without an electrode plate(s). The main portion 13M of the binding margin 13z continuous with the separating portion 13p of the separator member 13 is fanfolded in layers without electrode plates. This process of fanfolding the main portion 13M in layers without electrode plates is fanfolding the main portion in layers without placing an electrode plate between the layers.

In FIG. 13, the binding margin 13z fanfolded in layers without electrode plates is fixed to the laminate body 10L with the first fixtures 131 and the second fixtures 132. The first laminating device 100 cuts the separator member 13 with a cutter 160. The separator member 13 is cut to a length that allows the binding margin 13z to be wound once around the laminate body 10L and allows the side edge 13s to be placed on the side portion 10b. The binding margin 13z has a length Lb that is set to (2 × w1 + 2 × w2) < Lb < (2 × w1 + 3 × w2), where w1 is the width of the side surface 10a, and w2 is the width of the side portion 10b of the laminate body 10L. For example, the length Lb of the binding margin 13z is set to satisfy Lb = 2 × w1 + 2.5 × w2.

The cutting process includes fanfolding the separator member 13 in layers without placing electrode plates between the layers shown in FIGS. 10 to 12 and cutting the separator member 13 with the cutter 160 shown in FIG. 13.

### (2-4) Transfer process

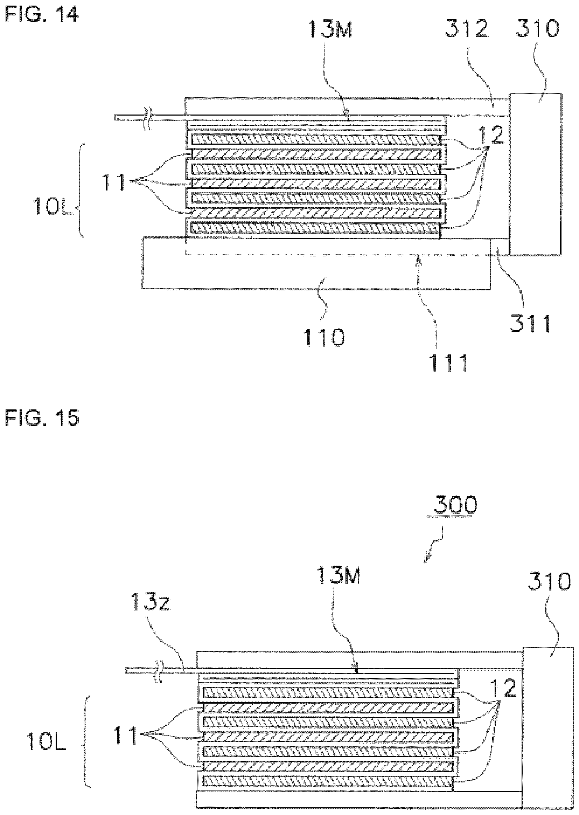

In FIG. 14, the transferrer 300 maintains the main portion 13M of the binding margin 13z fanfolded in layers without electrode plates by holding the laminate body 10L and the main portion 13M with a transfer handler 310. For example, the transfer handler 310 includes lower forks 311 to support the laminate body 10L from below and upper forks 312 to hold the main portion 13M from above. The laminating stage 110 thus includes a groove 111 to receive the lower forks 3 11.

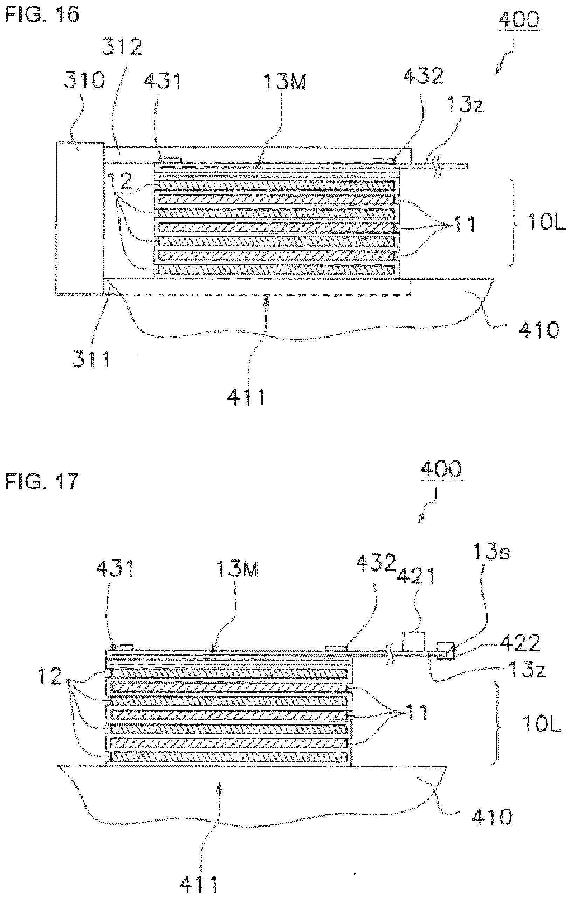

The transferrer 300 includes, as shown in FIG. 5, a support 320 supporting the transfer handler 310 and a slide 330 that allows the transfer handler 310 and the support 320 to slide. For example, the transferrer 300 holds the laminate body 10L and the binding margin 13z with the transfer handler 310 (refer to FIG. 15), lifts the transfer handler 310 with the support 320, and slides the transfer handler 310 and the support 320 with the slide 330 from the position of the first laminating device 100 to the position of the binder 400. The slide 330 moves, for example, along a rail 340. For example, the transferrer 300 places, with the support 320, the transfer handler 310, the laminate body 10L, and the binding margin 13z on a support base 410 in the binder 400. After the binder 400 fixes the laminate body 10L and the main portion 13M of the binding margin 13z on the support base 410 with two first fixtures 431 and two second fixtures 432 (refer to FIG. 16), the transferrer 300 removes the transfer handler 310 from the laminate body 10L and the main portion 13M.

### (2-5) Binding Process

With the laminate body 10L and the main portion 13M of the binding margin 13z fixed on the support base 410 with the two first fixtures 431 and the two second fixtures 432, as shown in FIG. 17, the adjacent portion of the side edge 13s of the binding margin 13z is fixed by a suction portion 421 and held by a clamp 422.

When the laminate body 10L maintains its shape without being held by the first fixtures 431 and the second fixtures 432, the holding operation with the first fixtures 431 and the second fixtures 432 may be eliminated.

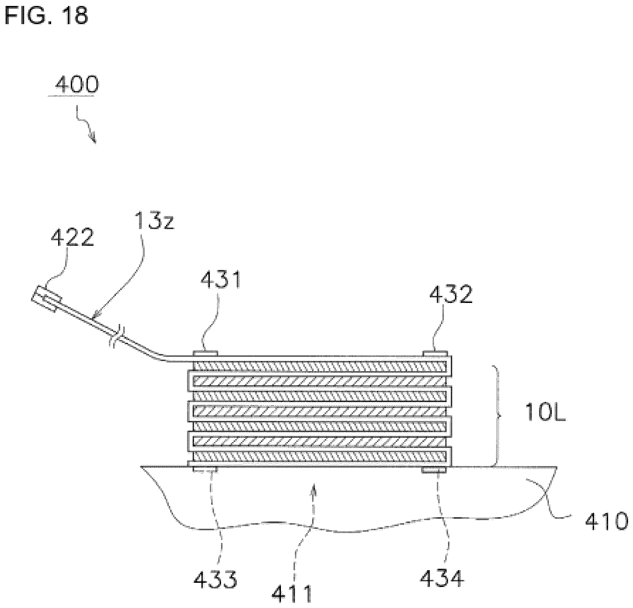

As shown in FIG. 18, the clamp 422 is moved away from the laminate body 10L to unfold the binding margin 13z fanfolded in layers without electrode plates. To unfold the binding margin 13z fanfolded in layers without electrode plates, the first fixtures 431 and the second fixtures 432 holding the main portion 13M are removed alternately, for example. When the laminate body 10L maintains its shape without being held by the first fixtures 431 and the second fixtures 432, the holding operation with the first fixtures 431 and the second fixtures 432 may be eliminated.

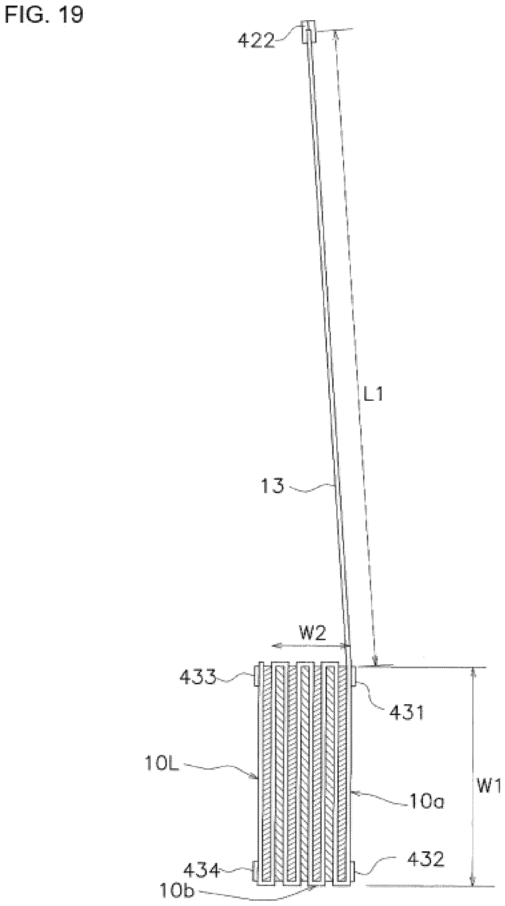

As shown in FIG. 19, to maintain the structure of the laminate body 10L when rotated, the rectangular laminate body 10L has its portion adjacent to the four sides fixed by the first fixtures 431, the second fixtures 432, third fixtures 433, and fourth fixtures 434. The clamp 422 then pulls the adjacent portion of the side edge 13s of the separator member 13 to apply tension to the binding margin 13z. With the separator member 13 being wound around the side portions 10b, a length L1 from the side edge 13s of the separator member 13 to the laminate body 10L shown in FIG. 19 is the sum of twice the width w1 of side surface 10a, twice the width w2 of side portion 10b, and a length α to the middle of the side portion 10b (or the sum of 2 × w1 + 2 × w2 + α). For example, when the width w1 of the side surface 10a is 120 mm, the width w2 of the side portion 10b is 30 mm, and the length α is 15 mm, the length L1 is 325 mm.

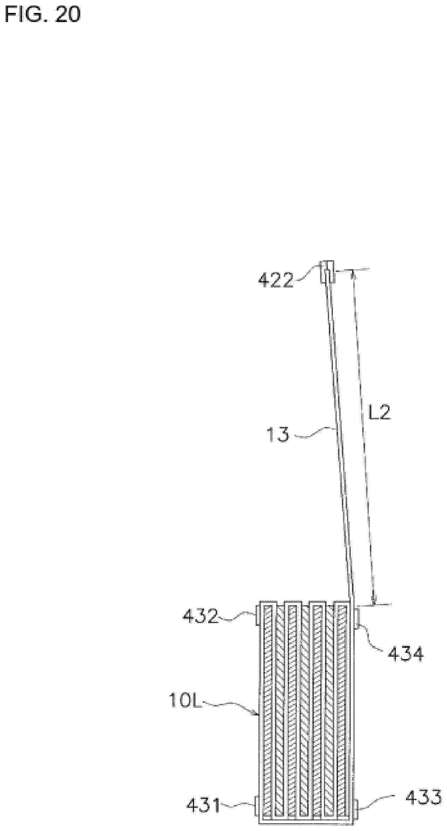

In FIG. 20, the laminate body 10L in FIG. 19 is rotated 180 degrees clockwise, with the separator member 13 wound around one side surface 10a and one side portion 10b. A remaining length L2 in FIG. 20 is 175 mm in the above example.

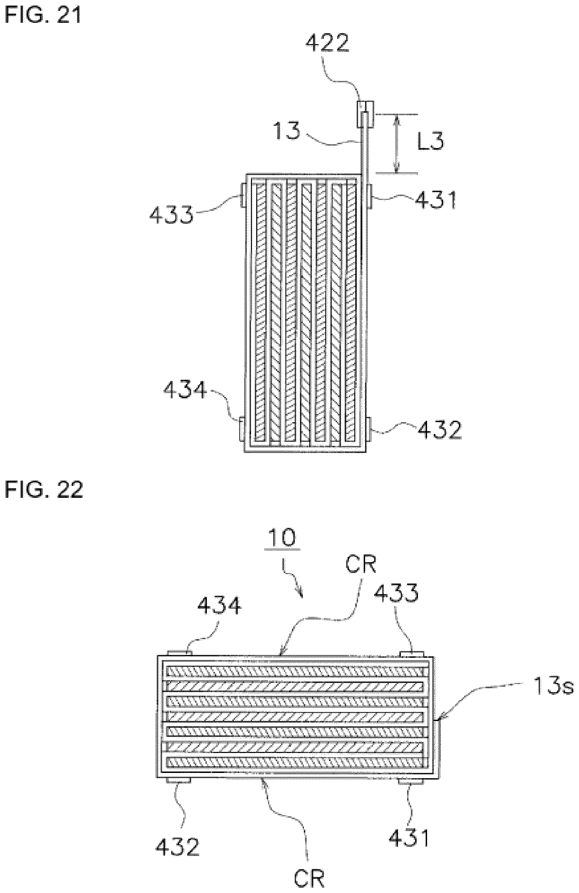

In FIG. 21, the laminate body 10L in FIG. 20 is rotated 180 degrees clockwise, with the separator member 13 wound around two side surfaces 10a and two side portions 10b. A remaining length L3 in FIG. 21 is 25 mm in the above example.

As shown in FIG. 22, the laminate 10 is complete after the remaining portion of the separator member 13 is attached to the side portion 10b of the laminate body 10L with, for example, adhesive tape. The end of the separator member 13 may be, for example, welded with heat or bonded with an adhesive in place of being fixed with adhesive tape.

The laminate body 10L and the binding margin 13z formed by the first laminating device 100 are herein respectively referred to as a first laminate body and a first binding margin. The laminate body 10L and the binding margin 13z formed by the second laminating device 200 are herein respectively referred to as a second laminate body and a second binding margin.

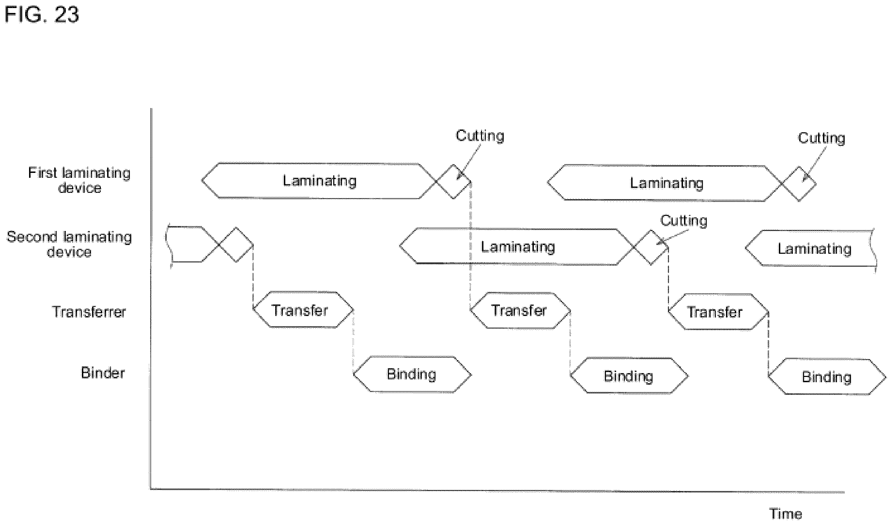

In the manufacturing apparatus 1000 for the laminated battery, the first laminating device 100 forms the first laminate body and the first binding margin at a timing different from when the second laminating device 200 forms the second laminate body and the second binding margin. FIG. 23 is a timing chart of an example operation of two laminating devices being the first laminating device 100 and the second laminating device 200. For example, the first laminating device 100 and the second laminating device 200 each take two minutes to form the laminate body 10L and the binding margin 13z, and the binder 400 takes 30 seconds to bind the laminate 10. In this case, one minute after the first laminating device 100 starts to form the first laminate body and the first binding margin, the second laminating device 200 starts to form the second laminate body and the second binding margin. The binder 400 then starts binding after the first laminating device 100 completes the first laminate body and the first binding margin to complete the laminate 10 including the first laminate body and the first binding margin before the second laminating device 200 completes the second laminate body and the second binding margin. Similarly, the binder 400 starts binding after the second laminating device 200 completes the second laminate body and the second binding margin to complete the laminate 10 including the second laminate body and the second binding margin before the first laminating device 100 completes the first laminate body and the first binding margin.

The manufacturing apparatus 1000 for the laminated battery with this structure may include two laminating devices 100 and 200 and one binder 400. The manufacturing apparatus 1000 for the laminated battery can manufacture one laminate 10 in two minutes, shortening the manufacture time per laminate 10 by saving the time for binding.

### (3) Features

(3-1)
With the method for manufacturing the laminated battery 1 and in the manufacturing apparatus 1000 for the laminated battery described above, in the transfer process, the main portion 13M having a length at least twice the width of the wider side surface of the laminate body is fanfolded in layers without electrode plates while being transferred by the transferrer 300. The binder 400 can thus smoothly start the binding process after receiving the laminate body 10L and the binding margin 13z. The laminate body formation process performed by the first laminating device 100 and the second laminating device 200 is at least partially performed in parallel with the binding process performed by the binder 400. This can shorten the manufacturing time.

(3-2)
In the cutting process, the first laminating device 100 and the second laminating device 200 each fanfold the main portion 13M of the separator member 13 in layers without placing electrode plates between the layers. In the transfer process, the transferrer 300 holds the laminate body 10L and the main portion 13M of the binding margin fanfolded in layers without electrode plates to transfer the laminate body 10L and the binding margin 13z. This allows smooth transition from the laminate body formation process performed by the first laminating device 100 and the second laminating device 200 to the binding process performed by the binder 400 without adding further components to the manufacturing apparatus 1000 for the laminated battery or without complicating the manufacturing apparatus 1000 for the laminated battery.

(3-3)
In the cutting process, the first laminating device 100 and the second laminating device 200 each cut the separator member 13 to a length allowing the side edge 13s of the binding margin 13z to be placed on the side portion 10b of the laminate body 10L. The side edge 13s of the separator member 13 is thus easily placed on the side portion 10b of the laminate body 10L, allowing manufacture of the laminated battery 1 with reduced failures.

(3-4)
The first laminating device 100 forms the first laminate body and the first binding margin in parallel with but at a timing different from when the second laminating device 200 forms the second laminate body and the second binding margin. The binder 400 can thus sequentially bind the first laminate body with the first binding margin and the second laminate body with the second binding margin. In this case, the binder 400 can perform binding while the first laminating device 100 is forming the first laminate body and the first binding margin and the second laminating device 200 forming the second laminate body and the second binding margin, saving the time for binding in the manufacture of the laminate 10 and allowing efficient manufacture of a laminated battery.

### (4) Modifications

### (4-1) Modification A

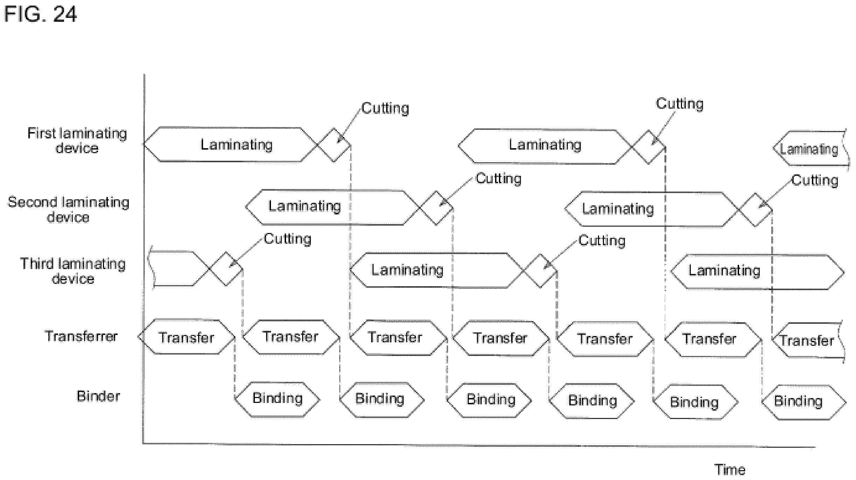

The method for manufacturing the laminated battery 1 and the manufacturing apparatus 1000 for the laminated battery described above use two laminating devices being the first laminating device 100 and the second laminating device 200. However, the number of laminating devices included in the manufacturing apparatus 1000 for the laminated battery is not limited to the example in the above embodiment. The manufacturing apparatus 1000 for the laminated battery may include one laminating device or three or more laminating devices. FIG. 24 is a timing chart of an example operation of three laminating devices being a first laminating device, a second laminating device, and a third laminating device. As shown in FIG. 24, one transferrer sequentially moves from the first laminating device, the second laminating device, and the third laminating device to the binder. The first laminating device, the second laminating device, and the third laminating device can start the laminate body formation process in the subsequent cycle without waiting for the laminate body and the binding margin to be transferred. One binder then sequentially binds the laminate bodies formed by the first laminating device, the second laminating device, and the third laminating device. The first laminating device, the second laminating device, the third laminating device, and the transferrer can start the laminate body formation process and the transfer process without waiting for the binding process to be ended.

### (4-2) Modification B

The method for manufacturing the laminated battery 1 and the manufacturing apparatus 1000 for the laminated battery described above use two laminating devices being the first laminating device 100 and the second laminating device 200 and one binder 400. However, the ratio between the number of binders 400 and the number of laminating devices is not limited to the example in the above embodiment. For example, the ratio between the number of binders and the number of laminating devices may be one-to-one, one-to-three, or one-to-four.

### (4-3) Modification C

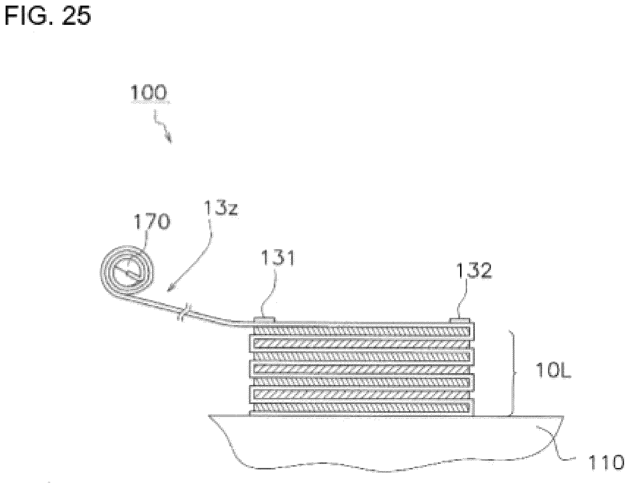

With the method for manufacturing the laminated battery 1 and in the manufacturing apparatus 1000 for the laminated battery described in the above example, the positional relationship between the main portion 13M and the laminate body 10L is maintained by fanfolding the main portion 13M in layers without placing electrode plates between the layers. The positional relationship between the main portion 13M and the laminate body 10L is maintained with a method other than in the above embodiment. For example, in the cutting process, the main portion of the binding margin continuous with the separating portion of the separator member may be wound, and the separator member including the binding margin may then be cut to form the binding margin. For example, as shown in FIG. 25, the binding margin 13z may be wound around a rod 170, allowing easy identification of the positional relationship between the rod 170 and the laminate body 10L. With the main portion 13M wound around the rod 170, the laminate body 10L and the binding margin 13z may be transferred.

### (4-4) Modification D

With the method for manufacturing the laminated battery 1 and in the manufacturing apparatus 1000 for the laminated battery described above, the binding margin 13z of the separator member 13 is wound once around the two side surfaces 10a and the two side portions 10b (once around the laminate body 10L). However, the binding margin 13z of the separator member 13 may be wound at least once around the two side surfaces 10a and the two side portions 10b (around the laminate body 10L). The binding margin 13z being wound around at least once may be wound, for example, 1.5 or 2 times around the laminate body 10L, allowing the side edge 13s of the binding margin 13z to be placed on the side portion 10b.

### (4-5) Modification E

With the method for manufacturing the laminated battery 1 described above, the transferrer 300 including the transfer handler 310 holds and transfers, in the transfer process, the laminate body 10L and the binding margin 13z. However, the transfer process may use a device other than the transferrer 300. For example, a robotic arm may be used in place of the transferrer 300. In the transfer process, the robotic arm may perform insertion.

Although one embodiment of the present invention has been described, the present invention is not limited to the embodiment, and may be changed in various manners without departing from the spirit and scope of the present invention. The embodiments and the modifications described herein may be combined in any manner as appropriate.

### REFERENCE SIGNS LIST

1 laminated battery
10 laminate
10L laminate body
11 positive plate
12 negative plate
13 separator member
13M main portion
13s side edge
100 first laminating device
200 second laminating device
300 transferrer
400 binder
1000 manufacturing apparatus for laminated battery

## Claims

1. A method for manufacturing a laminated battery, the method comprising:
forming a laminate body including a plurality of positive plates, a plurality of negative plates, and a separating portion of a separator member fanfolded in layers by fanfolding a strip of the separator member in layers while alternately placing the plurality of positive plates and the plurality negative plates on the layers of the separator member to have the layers of the separator member between the plurality of positive plates and the plurality negative plates;
cutting the separator member after folding or winding a main portion of a binding margin continuous with the separating portion of the separator member to form the binding margin;
transferring the laminate body and the binding margin with the main portion being folded or wound; and
binding the laminate body with the binding margin by winding the binding margin around the laminate body at least once,
wherein the main portion has a length at least twice a width of a wider side surface of the laminate body, and
the forming the laminate body is at least partially performed in parallel with the binding.

2. The method according to claim 1, wherein
the cutting includes fanfolding the main portion in layers without placing an electrode plate between the layers, and
the transferring includes transferring the laminate body and the binding margin with the main portion fanfolded in layers without an electrode plate and the laminate body being held.

3. The method according to claim 1 or claim 2, wherein
the cutting includes cutting the separator member to a length allowing a side edge of the binding margin to be placed on a side portion of the laminate body.

4. The method according to any one of claims 1 to 3, wherein
the laminate body includes a first laminate body and a second laminate body, and the binding margin includes a first binding margin and a second binding margin,
the forming the laminate body includes forming the first laminate body and the first binding margin in parallel with and at a timing different from when the second laminate body and the second binding margin are formed, and
the transferring and the binding include sequentially performing transferring and binding for the first laminate body and the first binding margin and for the second laminate body and the second binding margin.

5. A manufacturing apparatus for a laminated battery, the apparatus comprising:
a laminating device;
a transferrer; and
a binder,
wherein the laminating device forms a laminate body including a plurality of positive plates, a plurality of negative plates, and a separating portion of a separator member fanfolded in layers by fanfolding a strip of the separator member in layers while placing the plurality of positive plates and the plurality of negative plates on the layers of the separator member to have the layers of the separator member between the plurality positive plates and the plurality negative plates,
the laminating device folds or winds a main portion of a binding margin continuous with the separating portion of the separator member, and the main portion has a length at least twice a width of a wider side surface of the laminate body,
the laminating device cuts the separator member to form the binding margin,
the transferrer transfers, from the laminating device to the binder, the laminate body and the binding margin with at least the main portion being folded or wound,
the binder binds the laminate body with the binding margin by winding the binding margin around the laminate body at least once, and
the binder binds another laminate body at least partially in parallel with formation of the laminate body and the binding margin performed by the laminating device.

6. The manufacturing apparatus according to claim 5, wherein
the laminating device fanfolds, before cutting the separator member, the main portion in layers without placing an electrode plate between the layers, and
the transferrer transfers, from the laminating device to the binder, the laminate body and the binding margin by holding the laminate body and the main portion fanfolded in layers without an electrode plate placed between the layers.

7. The manufacturing apparatus according to claim 5 or claim 6, wherein
the laminating device cuts the separator member to a length allowing a side edge of the binding margin to be placed on a side portion of the laminate body.

8. The manufacturing apparatus according to any one of claims 5 to 7, wherein
the laminating device includes a first laminating device and a second laminating device,
the first laminating device and the second laminating device each separately form the laminate body and the binding margin at different timings, and
the transferrer and the binder perform transferring and binding sequentially for the laminate body and the binding margin formed by the first laminating device and for the laminate body and the binding margin formed by the second laminating device.

9. A laminated battery, comprising:
a plurality of positive plates and a plurality of negative plates alternating with one another; and
a strip of a separator member including a separating portion and a binding margin, the separating portion being fanfolded in layers between the plurality of positive plates and the plurality of negative plates adjacent to each other, the binding margin being continuous with the separating portion,
wherein the bonding margin in the separator member binds a laminate body including the plurality of positive plates, the plurality of negative plates, and the separating portion fanfolded in layers, with the bonding margin wound around the laminate body at least once, and
the binding margin has creases resulting from being fanfolded in layers.

10. The laminated battery according to claim 9, wherein
the binding margin has a side edge on a side portion of the laminate body.
